# EUROPÄISCHE PATENTSCHRIFT

(11) **EP 2 130 737 B1**
(45) Veröffentlichungstag und Bekanntmachung des Hinweises auf die Patenterteilung: **29.08.2012**
(21) Anmeldenummer: 09005793.6
(22) Anmeldetag: 25.04.2009
(51) Int. Cl.: B60W 30/18, B60T 7/22, B60W 10/184, B60W 10/18, B60W 10/08, B60T 13/58, B60L 7/18

(54) **Bremsanlage für ein Kraftfahrzeug**
Braking assembly for a motor vehicle
Dispositif de freinage pour un véhicule automobile

(30) Priorität: 05.06.2008 DE 102008026940
(43) Veröffentlichungstag der Anmeldung: 09.12.2009
(73) Patentinhaber: Volkswagen Aktiengesellschaft, 38440 Wolfsburg (DE)
(72) Erfinder: Fuhrmann, Karl-Horst, 38110 Braunschweig (DE); Bickschlag, Oliver, 38165 Lehre (DE); Barthenheier, Thomas, 38106 Braunschweig (DE)

(56) Entgegenhaltungen:
- EP-A1- 1 437 254
- DE-A1- 10 152 632
- DE-A1- 10 348 392
- DE-A1- 19 952 892

## Beschreibung

Die Erfindung bezieht sich auf eine Bremsanlage für ein Kraftfahrzeug mit einem als Rekuperator einsetzbaren Elektromotor, umfassend eine Betriebsbremse mit an den Fahrzeugrädern angeordneten Radbremsen, eine hilfskraftbetätigte Feststellbremse, die unabhängig von der Betriebsbremse arbeitet, und eine Steuereinrichtung, welche bei einer Bremsmomentanforderung eines Fahrers ein über den Rekuperator bereitstellbares Bremsmoment ermittelt. Weiterhin bezieht sich die Erfindung auf ein mit einer solchen Bremsanlage ausgestattetes Kraftfahrzeug.

Bremsanlagen der eingangs genannten Art sind aus der US 6,155,365 A1 und der DE 103 24 948 A1 bekannt, welche sich auf Kraftfahrzeuge mit Hybridantrieb, nämlich mit einem Verbrennungsmotor und einem Elektromotor, beziehen. Während eines Bremsvorgangs wird der Elektromotor als Generator bzw. Rekuperator betrieben, um kinetische Energie des Fahrzeugs in elektrische Energie umzuwandeln, so dass diese zu einem späteren Zeitpunkt zum Antrieb des Fahrzeugs oder anderen Zwecken genutzt werden kann. Bisweilen reicht das im Rekuperationsbetrieb bereitgestellte Bremsmoment für einen Bremsvorgang nicht aus. Zudem sind Fahrzustände denkbar, in denen es zweckmäßig ist, den Elektromotor nicht als Rekuperator zu betreiben. In solchen Fällen wird das fehlende Bremsmoment über die Betriebsbremse bereitgestellt. Zur Verteilung einer vom Fahrer über das Bremspedal vorgegebenen Bremsmömentanforderung ist am Fahrzeug eine Steuereinrichtung vorgesehen, welche beispielsweise in Abhängigkeit von Fahrzustandsparametem sowie des Ladungszustands des elektrischen Systems eine Verteilung der Bremsmomentanforderung auf den Rekuperator und die Betriebsbremse veranlasst. Solange die Summe der Bremsmomente konstant bleibt, können die Anteile entsprechend variiert werden, ohne dass der Fahrer dies in einer veränderten Verzögerung oder einem veränderten Pedalweg wahrnimmt.

Bei einer Betätigung des Bremspedals und nicht ausreichendem Bremsmoment durch Rekuperation muss zum Ausgleich des fehlenden Bremsmoments eine aufwändige Veränderung der Betriebsbremse vorgenommen werden, damit eine Rückwirkung auf das Bremspedal vermieden wird.

Der Erfindung liegt die Aufgabe zugrunde, hier Abhilfe zu schaffen.

Hierzu wird eine Bremsanlage gemäß Patentanspruch 1 bereitgestellt. Die erfindungsgemäße Bremsanlage umfasst eine Betriebsbremse mit an den Fahrzeugrädern angeordneten Radbremsen, eine hilfskraftbetätigte Feststellbremse, die unabhängig von der Betriebsbremse arbeitet, und eine Steuereinrichtung, welche bei einer Bremsmomentanforderung eines Fahrers ein über den Rekuperator bereitstellbares Bremsmoment ermittelt. Sie zeichnet sich dadurch aus, dass die Steuereinrichtung derart konfiguriert ist, um bei einer Bremsmomentanforderung, welche das vom Rekuperator bereitstellbare Bremsmoment übersteigt, die Feststellbremse zur Erzeugung eines zusätzlichen Bremsmoments zu betätigen.

Durch die Darstellung des zusätzlichen Bremsmoments über die Feststellbremse und nicht über die Betriebsbremse wird eine Rückwirkung auf das Bremspedal vermieden. Die Erfindung ermöglicht somit eine komfortable Umsetzung von Brake Blending ohne kostenintensive Änderungen der Betriebsbremse. Bestehende Bremsanlagen können einfach modifiziert oder nachgerüstet werden.

Vorteilhafte Ausgestaltungen der Erfindung sind in weiteren Patentansprüchen angegeben.

Gemäß einer vorteilhaften Ausgestaltung weist die Steuereinrichtung mindestens einen Steuerungszustand auf, in dem ausschließlich der Rekuperator und die Feststellbremse Bremsmomente bereitstellen, so dass sich eine einfache Ansteuerung ergibt und aufwändige Modifikationen der Betriebsbremse vermieden werden.

Es ist jedoch auch möglich, das erfindungsgemäße Prinzip lediglich auf ausgewählte Situationen zu begrenzen und in anderen Situationen auf aus dem oben genannten Stand der Technik bekannte Steuerungszustände zurückzugreifen. In entsprechender Ausgestaltung weist die Steuereinrichtung dann mindestens einen Steuerungszustand auf, in dem die Bremsmomentanforderung auf die Betriebsbremse und den Rekuperator verteilt wird.

Es ist jedoch grundsätzlich auch möglich, die Unterstützung des Rekuperators stets allein durch die Feststellbremse, das heißt ohne Eingriff in die Betätigung der Betriebsbremse, vorzunehmen.

Gemäß einer weiteren vorteilhaften Ausgestaltung der Erfindung wird die Bremsmomentanforderung über einen Pedalsimulator generiert, dem als Eingangssignal die Stellung und/oder Pedalkraft eines Bremspedalhebels aufgeschaltet ist. Ein solches Brake-by-Wire-System bietet im Hinblick auf die Verteilung einer Bremsmomentanforderung maximale Flexibilität.

Die Betriebsbremse kann jedoch auch als hydraulische Bremse konfiguriert sein, welche bei einer Bremspedalbetätigung einen Leerweg aufweist. Ein solcher Leerweg resultiert beispielsweise aus der Position der Schnüffelbohrungen eines Hauptbremszylinders. Bei Pedalbetätigungen innerhalb des Pedalleerwegs kann eine Aufteilung zwischen der hydraulischen Betriebsbremse und der Rekuperation ohne Rückwirkung auf die Verzögerung oder den Pedalweg vorgenommen werden. Erfindungsgemäß kann die Aufteilung des angeforderten Bremsmoments zwischen dem Rekuperator und der Feststellbremse erfolgen. Jenseits des Leerwegs setzt die Betriebsbremse ein. Gegebenenfalls kann in diesem Bereich zusätzlich eine Unterstützung durch den Rekuperator und/oder die Feststellbremse erfolgen.

Gemäß einer weiteren, vorteilhaften Ausgestaltung der Erfindung werden insbesondere Bremsvorgänge zur automatischen Geschwindigkeit- und/oder Abstandsregelung, gegebenenfalls bis zu einem vollständigen Stillstand des Fahrzeugs, über die Feststellbremse vorgenommen werden. Gegebenenfalls kann hier auch eine Kombination von Bremsmomenten des Rekuperators und der Feststellbremse vorgenommen werden.

Die Erfindung schafft ferner ein Kraftfahrzeug mit einer Bremsanlage der vorstehend erläuterten Art.

Weiteren ist es möglich, das erfindungsgemäße Prinzip, eine fahrerunabhängig ansteuerbare Feststellbremse zur Bereitstellung eines Bremsmoments während des Fahrbetriebs heranzuziehen, auch für Verzögerungsanforderungen an Fahrzeugen mit herkömmlichem Antrieb zu nutzen. Insbesondere können Bremsvorgänge zur automatischen Geschwindigkeit-und/oder Abstandsregelung, gegebenenfalls bis zu einem vollständigen Stillstand des Fahrzeugs, vorwiegend oder ausschließlich über die Feststellbremse dargestellt werden. Hierdurch wird bei einem Regeleingriff jegliche Rückwirkung auf das Bremspedal vermieden.

Nachfolgend wird die Erfindung anhand eines in der Zeichnung dargestellten Ausführungsbeispiels näher erläutert. Die Zeichnung zeigt in:
- Figur 1: eine schematische Darstellung einer Bremsanlage nach einem Ausführungsbeispiel der Erfindung,
- Figur 2: eine Darstellung einer hilfskraftbetätigten Feststellbremse, und in
- Figur 3: ein Diagramm zur Veranschaulichung der Zusammensetzung des Bremsmoments M_{Rad} aus Anteilen des Rekuperators M_{R} und der Feststellbremse M_{F} über des Pedalwegs s_{P} eines Bremspedals.

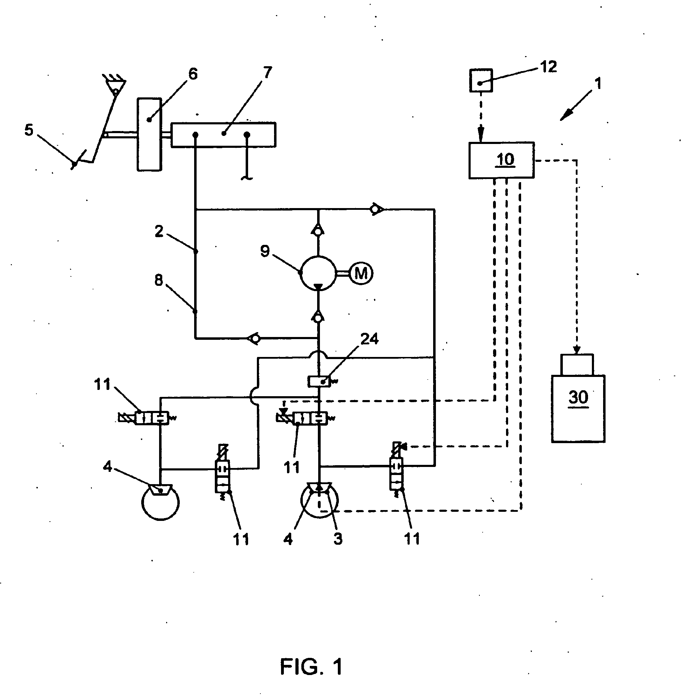

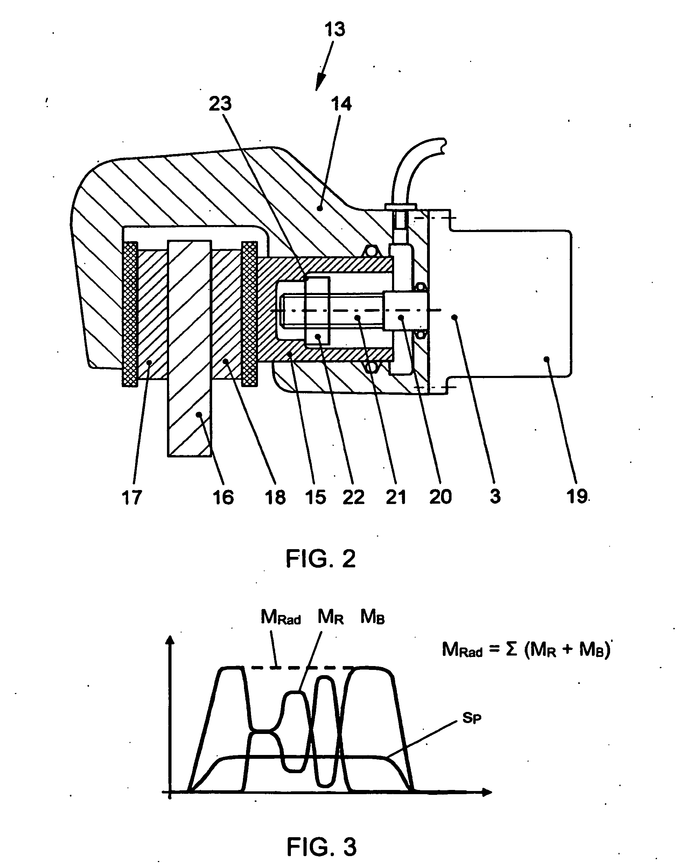

Die in Figur 1 und 2 beispielhaft dargestellte Bremsanlage 1 eines Kraftfahrzeugs umfasst eine an sich bekannte hydraulisch betätigbare Betriebsbremse 2 mit einer entsprechenden Hydraulikschaltung zur Bereitstellung eines Bremsdrucks, sowie eine elektromechanische Feststellbremse 3 mit entsprechenden Aktuatoreinheiten, die an ausgewählten Radbremsen 4 angreifen. Über die Feststellbremse 3 ist neben einer Feststellbremsfunktion zusätzlich eine Hilfs- und Notbremsfunktion darstellbar.

Bei dem dargestellten Ausführungsbeispiel weist die hydraulisch betätigbare Betriebsbremse 2 zwei Bremskreise auf, von denen jedoch lediglich einer dargestellt ist. Je Bremskreis ist eine elektromechanische Feststellbremse 3 vorgesehen, die sich jeweils an einer Radbremse 4 eines Hinterrads befindet. Die hydraulische Betriebsbremse 2 überträgt die auf ein Bremspedal 5 aufgebrachte Kraft unter Zwischenschaltung eines Bremskraftverstärkers 6 auf einen Hauptbremszylinder 7, von dem der hydraulische Druck über ein Druckleitungssystem 8 an die Radbremsen 4 übertragen wird. Weiterhin umfasst die hydraulische Betriebsbremse 2 eine Pumpe 9, um im Bedarfsfall einen automatischen Bremseingriff über die Betriebsbremse zu ermöglichen. Eine elektronische Steuereinrichtung 10 veranlasst in Abhängigkeit von erfassten Fahrzeugparametern und gegebenenfalls vom Fahrer vorgegebenen Parametern einen Bremseneingriff oder begrenzt einen solchen. In der Hydraulikschaltung der Betriebsbremse 2 vorgesehene Ventile 11 ermöglichen in Zusammenwirkung mit der Steuereinrichtung 10 die Funktionalitäten eines Antiblockiersystems, und/oder einer Antriebschlupfregelung und/oder eines elektronischen Stabilitätsprogramms.

Die Steuereinrichtung 10 dient weiterhin dazu, einen von Fahrer beispielsweise über einen Schalter 12 vorgegebenen Wunsch zum Spannen oder Lösen der elektrischen Feststellbremse 3 zu übertragen und weiterhin deren Betätigung zu kontrollieren.

Bei dem hier dargestellten Ausführungsbeispiel sind die Radbremsen 4 als Kombi-Bremssattel-Konstruktionen gemäß Figur 2 ausgeführt, ohne dass die Erfindung auf eine solche Konfiguration beschränkt wäre. Vielmehr lässt sich die Erfindung auf alle Arten von Scheibenbremsen und Trommelbremsen mit elektromechanischer Feststellbremse übertragen.

Figur 2 zeigt einen Bremssattel 13 mit einem Gehäuse 14, das ein Zuspannorgan in Form eines Bremskolbens 15 gleitbewegbar aufnimmt. Die Rückseite des Bremskolbens 15 ist mit dem Druck der hydraulischen Betriebsbremse 2 beaufschlagbar. Bei Betätigung der Betriebsbremsfunktion drückt der Bremskolben 15 in Figur 2 nach links, so dass die Bremsscheibe 16 zwischen den Bremsbelägen 17 und 18 mit Kraft beaufschlagt wird. Fällt der Druck ab, so kann die Bremsscheibe 16 zwischen den Bremsbelägen 17 und 18 frei drehen. An dem Bremssattel 13 sind weiterhin die Komponenten für die Feststellbremse 3 vorgesehen, die letztlich ebenfalls an dem Zuspannorgan bzw. dem Bremskolben 15 angreifen. Die Aktuatoreinheit der Feststellbremse 3 arbeitet unabhängig von der Betriebsbremse 2. Sie umfasst eine elektrische Antriebseinrichtung 19 in Form eines Elektromotors. Das von der elektrischen Antriebseinrichtung 19 erzeugte Moment wird auf einen Spindeltrieb 20 übertragen. Dieser Spindeltrieb 20 umfasst eine mit der Abtriebswelle der elektrischen Antriebseinrichtung 19 drehfest gekoppelte Spindel 21, welche in eine Mutter 22 eingreift. Die Mutter 22 ist über Nuten in dem Bremskolben 15 gegen Verdrehen gesichert, so dass eine Rotation der Spindel 21 in eine Translationsbewegung der Mutter 22 übersetzt wird. Gelangt die Mutter 22, wie in Figur 2 dargestellt, in Anlage gegen einen axialen Anschlag 23 des Bremskolbens 15, so wird auf den Kolben 15 eine zusätzliche Zuspannkraft ausgeübt. Diese bleibt nach ihrer Erzeugung aufgrund der Selbsthemmung des Spindeltriebs 20 erhalten, so dass bei einer Deaktivierung der Antriebseinrichtung 19 eine einmal zugespannte Radbremse 4 in diesem Zustand verharrt, womit die Feststellbremsfunktion eingeschaltet ist. Zum Lösen der Radbremse 4 muss die Mutter 22 in die Gegenrichtung bewegt werden. Dies wird durch eine Umkehr der Drehbewegung der Antriebseinrichtung 19 realisiert.

Wird die vorstehend erläuterte Bremsanlage 1 an einem Kraftfahrzeug mit Hybridantrieb eingesetzt, kann die elektromechanische Feststellbremse 3 in Kombination mit einem als Generator bzw. Rekuperator betreibbaren Elektromotor 30 zur Darstellung von Verzögerungsanforderungen genutzt werden, wie dies nachfolgend näher erläutert wird.

Die Steuereinrichtung 10 ist derart konfiguriert, dass bei einer Betätigung des Bremspedals 5 und nicht ausreichendem Bremsmoment durch die Rekuperation ein zusätzliches Bremsmoment durch die Feststellbremse 3 erzeugt wird, ohne die Betriebsbremse 2 hierfür nutzen zu müssen und ohne eine Rückwirkung auf das Bremspedal 5 zu erzeugen.

Idealerweise wird bei einer Bremsmomentanforderung zur Energierückgewinnung ein möglichst hoher Rekuperationsanteil angestrebt. Der Rekuperationsanteil wird in der Steuereinrichtung 10 anhand vorgegebener Zuordnungsvorschriften unter Berücksichtigung von Fahrzustandsparametern sowie den Ladungszustand des elektrischen Systems kennzeichnender Parameter ermittelt. Reicht das über den Rekuperator 30 bereitstellbare Bremsmoment nicht aus, wird das fehlende Bremsmoment, welches in der Steuereinrichtung 10 ermittelt wird, wie beispielhaft für einen Bremsvorgang in Fig. 3 gezeigt, durch eine automatische Betätigung der Feststellbremse 3 erzeugt. Hierdurch wird jegliche Rückwirkung auf das Bremspedal 5 vermieden.

Die Bremsmomentanforderung kann beispielsweise mittels eines Stellungssensors über den Pedalweg oder die Winkelstellung des Bremspedals 5 erfasst werden. Alternativ oder ergänzend kann die Pedalkraft oder eine diese repräsentierende Größe erfasst werden.

Ist die Bremsanlage als Brake-by-Wire-Sytem ausgebildet, wird die Bremsmomentanforderung über einen Pedalsimulator generiert, dem als Eingangssignal die Stellung und/oder Pedalkraft eines Bremspedalhebels aufgeschaltet ist.

Vorzugsweise erfolgt die Unterstützung des Rekuperators 30 stets allein durch die Feststellbremse 3, das heißt ohne Eingriff in die Betätigung der Betriebsbremse 2, um Rückwirkungen auf das Bremspedal 5 zu vermeiden.

Solche sind in jedem Fall auch für den aus den Positionen der Schnüffelbohrungen des Hauptbremszylinders 7 resultierenden Leerweg der Betriebsbremse 2 ausgeschlossen. Gegebenenfalls kann der Leerweg gegenüber herkömmlichen Betriebsbremsen 2 verlängert werden. Innerhalb des Leerwegs der hydraulischen Betriebsbremse 2 wird eine Aufteilung eines angeforderten Bremsmoments zwischen dem Rekuperator und der Feststellbremse vorgenommen.

Nach Schließen der Druckkammern des Hauptbremszylinders 7 gegenüber einem nicht mehr dargestellten Ausgleichsbehälter tritt die Wirkung der Betriebsbremse 2 ein. Gleichwohl können auch in einem solchen Zustand zusätzliche Bremsmomente über den Rekuperator 30 und/oder die Feststellbremse 3 erzeugt werden. Eine Verteilung einer entsprechenden Bremsmomentanforderung wird in der Steuervorrichtung 10 vorgenommen. Die Steuereinrichtung 10 weist somit mindestens einen Steuerungszustand auf, in dem ausschließlich der Rekuperator 30 und die Feststellbremse 3 Bremsmomente bereitstellen, sowie gegebenenfalls einen weiteren Steuerungszustand, in dem die Bremsmomentanforderung auf die Betriebsbremse 2 und den Rekuperator 30 verteilt wird.

Der Einsatz der Feststellbremse 3 in Kombination mit den Rekuperator 30 kann auch für Bremsvorgänge zur automatischen Geschwindigkeits- und/oder Abstandsregelung eingesetzt werden. Dabei kann notfalls eine Abgrenzung bis zu einem vollständigen Stillstand des Fahrzeugs vorgenommen werden. Bei Fahrzeugen, welche lediglich einen herkömmlichen Antrieb in Form eines Verbrennungsmotors aufweisen, kann ebenfalls die Feststellbremse 3 anstelle oder in Ergänzung zur Betriebsbremse 2 für Bremsvorgänge zur automatischen Geschwindigkeit- und/oder Abstandsregelung eingesetzt werden.

Bei einer automatischen Geschwindigkeits- und/oder Abstandsregelung wird die Bremsmomentanforderung ohne Zutun des Fahrers in der Steuereinrichtung 10 automatisch generiert. Dazu werden die Position und die Geschwindigkeit eines vorausfahrenden Fahrzeugs mittels eines Sensors erfasst und die Geschwindigkeit sowie der Abstand des mit diesem System ausgerüsteten nachfolgenden Fahrzeugs durch einen Motor- und Bremseingriff geregelt. Zur Abstandsmessung können Radarsensoren oder Lidar-Systeme eingesetzt werden.

Die Feststellbremse kann auch für weitere Verzögerungsanforderüngen allein oder unterstützend eingesetzt werden, insbesondere dort, wo auf einfache Art und Weise eine Rückwirkung über das Bremspedal oder eine aufwändige Modifikation der Betriebsbremse vermeiden werden soll.

Die Erfindung wurde vorstehend anhand eines Ausführungsbeispiels sowie weiterer Abwandlungen näher erläutert. Sie ist jedoch nicht auf das dargestellte Ausführungsbeispiel beschränkt, sondern umfasst alle durch die Patentansprüche definierten Ausgestaltungen.

### Bezugszeichenliste

- 1: Bremsanlage
- 2: hydraulisch betätigbare Betriebsbremse
- 3: Feststellbremse
- 4: Radbremse
- 5: Bremspedal
- 6: Bremskraftverstärker
- 7: Hauptbremszylinder
- 8: Druckleitungssystem
- 9: Pumpe
- 10: Steuereinrichtung
- 11: Ventil
- 12: Betätigungsorgan
- 13: Bremssattel
- 14: Gehäuse
- 15: Bremskolben
- 16: Bremsscheibe
- 17: Bremsbelag
- 18: Bremsbelag
- 19: Antriebseinrichtung (Motorgetriebeeinheit)
- 20: Spindeltrieb
- 21: Spindel
- 22: Mutter
- 23: Axialanschlag
- 24: Druckbegrenzer
- 30: Elektromotor und Rekuperator
- M_{B}: Bremsmoment der Feststellbremse
- M_{R}: Bremsmoment des Rekuperators
- M_{Rad}: Bremsmoment
- s_{P}: Pedalweg

## Patentansprüche

1. Bremsanlage für ein Kraftfahrzeug mit einem als Rekuperator (30) einsetzbaren Elektromotor, umfassend:
eine Betriebsbremse (2) mit an den Fahrzeugrädern angeordneten Radbremsen,
eine hilfskraftbetätigte Feststellbremse (3), die unabhängig von der Betriebsbremse arbeitet, und
eine Steuereinrichtung (10), welche bei einer Bremsmomentanforderung eines Fahrers ein über den Rekuperator bereitstellbares Bremsmoment ermittelt,
**dadurch gekennzeichnet,**
**dass** die Steuereinrichtung (10) derart konfiguriert ist, um bei einer Bremsmomentanforderung, welche das vom Rekuperator (30) bereitstellbare Bremsmoment übersteigt, die Feststellbremse (3) zur Erzeugung eines zusätzlichen Bremsmoments zu betätigen.

2. Bremsanlage nach Anspruch 1, **dadurch gekennzeichnet, dass** die Steuereinrichtung (10) mindestens einen Steuerungszustand aufweiset, in dem ausschließlich der Rekuperator (30) und die Feststellbremse (3) Bremsmomente bereitstellen.

3. Bremsanlage nach Anspruch 1 oder 2, **dadurch gekennzeichnet, dass** die Steuereinrichtung (10) mindestens einen Steuerungszustand aufweist, in dem die Bremsmomentanforderung auf die Betriebsbremse (2) und den Rekuperator (30) verteilt wird.

4. Bremsanlage nach Anspruch 1, **dadurch gekennzeichnet, dass** die Unterstützung des Rekuperators (30) stets allein durch die Feststellbremse (3), das heißt ohne Eingriff in die Betätigung der Betriebsbremse, erfolgt.

5. Bremsanlage nach einem der Ansprüche 1 bis 4, **dadurch gekennzeichnet, dass** die Bremsmomentanforderung über einen Pedalsimulator generiert wird, dem als Eingangssignal die Stellung und/oder Pedalkraft eines Bremspedalhebels (5) aufgeschaltet ist.

6. Bremsanlage nach einem der Ansprüche 1 bis 4, **dadurch gekennzeichnet, dass** die Betriebsbremse (2) als hydraulische Bremse konfiguriert ist, welche bei einer Bremspedalbetätigung einen Leerweg aufweist, in dem eine Aufteilung eines angeforderten Bremsmoments zwischen dem Rekuperator (30) und der Feststellbremse (3) erfolgt

7. Bremsanlage nach einem der Ansprüche 1 bis 6, **dadurch gekennzeichnet, dass** Bremsvorgänge zur automatischen Geschwindigkeit- und/oder Abstandsregelung, gegebenenfalls bis zu einem vollständigen Stillstand des Fahrzeugs, über die Feststellbremse (3) vorgenommen werden.

8. Bremsanlage nach einem der Ansprüche 1 bis 6, **dadurch gekennzeichnet, dass** Bremsvorgänge zur automatischen Geschwindigkeit- und/oder Abstandsregelung, gegebenenfalls bis zu einem vollständigen Stillstand des Fahrzeugs, über den Rekuperator (30) und die Feststellbremse (3) vorgenommen werden.

9. Kraftfahrzeug mit einer Bremsanlage (1) nach einem der vorgenannten Ansprüche.

## Claims

1. Braking assembly for a motor vehicle, with an electric motor capable of being used as recuperator (30), comprising:
a service brake (2) with wheel brakes arranged on the vehicle wheels,
a power-operated parking brake (3) which works independently of the service brake, and
a control device (10) which, when a driver requires braking torque, determines a braking torque capable of being provided by the recuperator,
**characterized**
**in that** the control device (10) is configured in such a way as, in the event of a braking torque requirement exceeding the braking torque capable of being provided by the recuperator (30), to operate the parking brake (3) for the purpose of generating an additional braking torque.

2. Braking assembly according to Claim 1, **characterized in that** the control device (10) has at least one control state in which only the recuperator (30) and the parking brake (3) provide braking torques.

3. Braking assembly according to Claim 1 or 2, **characterized in that** the control device (10) has at least one control state in which the breaking torque requirement is distributed to the service brake (2) and to the recuperator (30).

4. Braking assembly according to Claim 1, **characterized in that** the assistance of the recuperator (30) always takes place solely by the parking brake (3), that is to say without action upon the operation of the service brake.

5. Braking assembly according to one of Claims 1 to 4, **characterized in that** the braking torque requirement is generated via a pedal simulator onto which the position and/or pedal force of a brake pedal lever (5) is locked as an input signal.

6. Braking assembly according to one of Claims 1 to 4, **characterized in that** the service brake (2) is configured as a hydraulic brake which, in the event of brake pedal operation, has an idle travel in which a required braking torque is divided between the recuperator (30) and the parking brake (3).

7. Braking assembly according to one of Claims 1 to 6, **characterized in that** braking actions for automatic speed and/or distance regulation, if appropriate up to a complete standstill of the vehicle, are carried out via the parking brake (3).

8. Braking assembly according to one of Claims 1 to 6, **characterized in that** braking actions for automatic speed and/or distance regulation, if appropriate up to a complete standstill of the vehicle, are carried out via the recuperator (30) and the parking brake (3).

9. Motor vehicle having a braking assembly (1) according to one of the abovementioned claims.

## Revendications

1. Installation de freinage pour un véhicule automobile qui présente un moteur électrique apte à être utilisé comme récupérateur (30), l'installation comprenant :
un frein de service (2) qui présente des freins de roues disposés sur les roues du véhicule,
un frein de stationnement (3) actionné par une force auxiliaire et travaillant indépendamment des freins de service et
un dispositif de commande (10) qui détermine le couple de freinage qui peut être délivré par le récupérateur en cas de demande de couple de freinage par le conducteur,
**caractérisée en ce que**
le dispositif de commande (10) est configuré de manière à actionner le frein de stationnement (3) pour délivrer ou couple de freinage supplémentaire si le couple de freinage demandé dépasse le couple de freinage qui peut être délivré par le récupérateur (30).

2. Installation de freinage selon la revendication 1, **caractérisée en ce que** le dispositif de commande (10) présente au moins un état de commande dans lequel seul le récupérateur (30) et le frein de stationnement (3) délivrent des couples de freinage.

3. Installation de freinage selon les revendications 1 ou 2, **caractérisée en ce que** le dispositif de commande (10) présente au moins un état de commande dans lequel la demande de couple de freinage est répartie entre le frein de service (2) et le récupérateur (30).

4. Installation de freinage selon la revendication 1, **caractérisée en ce que** le soutien par le récupérateur (30) s'effectue toujours uniquement par le frein de stationnement (3), c'est-à-dire sans intervention dans l'actionnement du frein de service.

5. Installation de freinage selon l'une des revendications 1 à 4, **caractérisée en ce que** la demande de couple de freinage est formée par un simulateur de pédale sur lequel la position et/ou la force exercée sur la pédale par un levier (5) de pédale de frein sont appliquées comme signal d'entrée.

6. Installation de freinage selon l'une des revendications 1 à 4, **caractérisée en ce que** le frein de service (2) est configuré comme frein hydraulique qui, en cas d'actionnement de la pédale de frein, présente un parcours à vide dans lequel le couple de freinage demandé est réparti entre le récupérateur (30) et le frein de stationnement (3).

7. Installation de freinage selon l'une des revendications 1 à 6, **caractérisée en ce que** pour la régulation automatique de la vitesse ou de la distance, éventuellement jusqu'à l'arrêt complet du véhicule, les opérations de freinage sont réalisées par l'intermédiaire du frein de stationnement (3).

8. Installation de freinage selon l'une des revendications 1 à 6, **caractérisée en ce que** pour la régulation automatique de la vitesse ou de la distance, éventuellement jusqu'à l'arrêt complet du véhicule, les opérations de freinage sont réalisées par l'intermédiaire du récupérateur (30) et du frein de stationnement (3).

9. Véhicule doté d'une installation de freinage (1) selon l'une des revendications précédentes.
